# EUROPEAN PATENT SPECIFICATION

(11) **EP 2 702 656 B1**
(45) Date of publication and mention of the grant of the patent: **24.05.2017**
(21) Application number: 12720555.7
(22) Date of filing: 29.03.2012
(51) Int. Cl.: H02J 3/14, B60K 6/00, G05B 13/02, H02J 13/00, B60L 11/18

(54) **POWER DEMAND MANAGEMENT ON A LOW VOLTAGE NETWORK WITH A PLURALITY OF INTELLIGENT SOCKETS**
ENERGIEBEDARFVERWALTUNGFÜR EIN NIEDERSPANNUNGSNETZ MIT EINER MEHRHEIT VON INTELLIGENTEN BUCHSEN
GESTION DE LA DEMANDE EN ÉNERGIE ÉLECTRIQUE POUR UN RÉSEAU À BASSE TENSION AVEC UNE PLURALITÉ DE SOCLES INTELLIGENTS

(30) Priority: 27.04.2011 GB 201107015
(43) Date of publication of application: 05.03.2014
(73) Proprietor: EA Technology Limited, Chester, Cheshire CH1 6ES (GB)
(72) Inventor: SINCLAIR, John Sean, Bramley Hampshire RG26 5DT (GB)
(74) Representative: Wilson Gunn
(86) International application number: PCT/GB2012/050702
(87) International publication number: WO 2012/146907

(56) References cited:
- WO-A1-2008/073453
- GB-A- 2 467 981
- US-A- 4 027 171
- US-A1- 2010 023 786

## Description

The present invention relates to a method, system and apparatus for management of the demand for electrical power and in particular to such a method adapted to combat the increased load placed on a network by multiple electric vehicle owners recharging their vehicles simultaneously.

Ownership levels of electric vehicles are expected to rise in the near future as such vehicles are seen as increasingly practical and environmentally friendly. More and more owners of such vehicles are thus likely to start charging their vehicles from their domestic electricity supply. Typically this might be accomplished by plugging a vehicle charging cable into a dedicated socket, perhaps located in a garage.

Typically, it is expected that owners of such vehicles would plug them in to charge once they return home in the evening. Since this is already the peak of the daily demand curve, there is a risk that the low voltage cables supplying power to local homes will become overloaded. One solution to this problem would be a major increase in the load capacity of local domestic supply networks. Increasing network capacity is however very costly and likely to be very disruptive. It will also require a considerable time period for implementation and in the meantime such problems would remain.

In a different context, demand side management (DSM) has been trialled for hot water heating systems in Australia and New Zealand. In this system, the overall load on the supply network is monitored. During peak demand hours, independent of the actual demand on local power supply networks, groups of water heating systems are disconnected from the network. By disconnecting multiple water heating systems from the network potential overload of the electricity system can be avoided. This solution can be acceptable in this case since water may be preheated and stored in insulated tanks. It is less tenable in the case of electric vehicles which may need to be recharged immediately to facilitate further use.

WO 2008/073453 discloses a system operable to manage distribution of power over a power supply grid. The system relies upon the provision of both power supply and data connections to various loads. The document describes monitoring the status of the various loads centrally and using the data connection to monitor and control whether power is supplied to each of the loads. This functionality is used for large scale power aggregation management to prevent the power supply grid from being overloaded.

US 2010/0623786 describes a system and method for reducing power demand loads. In particular, this may involve reducing demand by the use of a plurality of load control units to intermittently turn off or reduce power demand from particular power sources. The length of the on/off cycles is disclosed to be determined by: a required load reduction, a convenience or comfort factor or one or more users or the existence of an emergency.

It is therefore an object of the present invention to provide an improved method of demand side management that overcomes or alleviates the above problems by operating at the local level.

According to a first aspect of the present invention there is provided a method suitable for managing electrical power demand on a low voltage circuit of an electricity supply network provided with a plurality of intelligent sockets, the method comprising: monitoring the plurality of intelligent sockets to determine which sockets are in use; monitoring the overall load demanded from the network circuit; and, when the overall load demand exceeds a threshold value, cyclically disconnecting and connecting the supply to those intelligent sockets in use characterised in that the cycle is varied in response to any unrestricted use of intelligent sockets prior to the initiation of cyclical disconnection and connection.

The present invention thus prevents low voltage network circuits becoming overloaded when multiple high load appliances, such as electric vehicles, are connected to intelligent sockets. Advantageously, the present invention still provides for at least some rationed supply to these high load appliances dependent upon overall load and demand. The present invention can thus provide a more flexible solution to demand side management problems.

The intelligent sockets may be provided in place of all conventional plug sockets on the network section. More preferably, the intelligent sockets are provided for high load appliances only. This allows the present invention to maximise its effect for minimal reinforcement or replacement of the existing infrastructure. In this context, for the sake of example only, a high load appliance might be any appliance drawing, say, 3.3kW or more. A particular example of a high load appliance would be an electric vehicle when charging. As the method takes account of any intelligent sockets connected prior to the initiation of cyclical disconnection and connection, the cycle may be varied in response to any such unrestricted use of intelligent sockets prior to the initiation of cyclical disconnection and connection. In the case of charging electric vehicles, this may involve accounting for any unrestricted charging that has taken place prior to the circuit reaching the overload threshold.

The cyclical disconnection and connection of the in use intelligent sockets may be operable according to any suitable cycle. In particular, the cycle may be adapted to provide that each intelligent socket in use will receive an equal connection time. In the case of charging electric vehicles, each vehicle would thereby receive an equal charging period during periods where the network circuit would otherwise be overloaded. Each intelligent socket in use may be disconnected and connected sequentially in turn or selected groups of intelligent sockets may be disconnected and connected sequentially in turn. As the method takes account of any intelligent sockets connected prior to the initiation of cyclical disconnection and connection, the cycle may be varied in response to any such unrestricted use of intelligent sockets prior to the initiation of cyclical disconnection and connection. In the case of charging electric vehicles, this may involve accounting for any unrestricted charging that has taken place prior to the circuit reaching the overload threshold.

The method may be implemented by a demand management unit. The demand management unit may be located at a substation. As such, the demand management unit may operate as a monitor and control system for the network circuit. The substation may be operable to control the overall power distribution within the network section. The substation may be operable to receive power from a high voltage supply network and transform it to a low voltage domestic supply. In the context of the present invention, the skilled man will appreciate that: the term low voltage relates to voltages typical in domestic electricity supply, say, 230/400V (single-phase or three-phase); and the term high voltage relates to voltages commonly used in longer range electrical power distribution say, 1kV or more.

The substation may have one or more outgoing low voltage power supply cables (circuits), as required or desired. Each such low voltage power supply cable may be connected to one or more properties. The method may involve monitoring the overall load on the substation or the overall load on individual low voltage power supply cables.

The demand management unit may be provided with load monitoring means operable to measure the overall load on the substation or the overall load on individual low voltage power supply cables. The load monitoring means may comprise current and/or voltage measuring apparatus as appropriate. Particular examples of suitable load monitoring means might include, but are not limited to current measurements made via clip-on current transformers and voltage measurements made via direct voltage connections.

The demand management unit may be provided with means for monitoring and determining which intelligent sockets are in use. The demand management unit may be provided with demand control means operable to compare the output of the load monitoring means with the preset threshold load value. In response to the comparison, the demand control means may be operable to cyclically connect and disconnect the supply to those intelligent sockets in use.

The demand management unit may be provided with a local interface or with a connection to an external device operable to select or adjust the preset threshold value. In this manner, the threshold value can be adjusted in light of changes to the network circuit capacity and/or anticipated supply or demand.

The demand management unit may be operable to communicate information relating to its operation to a network management system. In this manner, monitoring and management of the network as a whole may be improved. The demand management unit may be operable to store data relating to its operation. This data may be stored in a local data store incorporated into the demand management unit or may be stored in a remote data store in communication with the demand management unit.

The intelligent sockets may each be operable to communicate to the demand management unit when they are in use. In this manner, the demand management unit can determine how many intelligent sockets are in use on the network section.

Communication between the intelligent socket and the demand management unit may takes place by any suitable wired or wireless link or indeed any combination thereof. A particularly suitable wired link would be power line carrier (PLC) signalling. A particularly suitable wireless link may utilise cellular phone networks, wireless data networks or other radio frequency transmissions.

Each intelligent socket may be provided with a unique identity. In this manner each intelligent socket may be separated identified and/or addressed in communications with the demand management means.

The determination of whether an intelligent socket is in use may be achieved by means of a use monitor. The use monitor may be incorporated into the intelligent socket. The use monitor may typically be operable to monitor the load drawn from the intelligent socket to determine that the socket is in use. As such, the use monitor may comprise current and/or voltage measuring apparatus as appropriate. Particular examples of suitable use monitors might include, but are not limited to current measurements via discrete current transformers within the socket.

Disconnection or connection of an intelligent socket may be carried out by a suitable switch. The switch may be incorporated into the intelligent socket. The switch may be operable in response to signals received from the demand management unit.

The intelligent socket may be provided with a control unit. The control unit may be operable to receive signals from the use monitor, communicate with a remote demand management unit and control the operation of the switch.

The control unit may be operable to store data relating to operation of the intelligent socket. This data may be stored in a data store incorporated into the intelligent socket or may be stored in a remote data store in communication with the intelligent socket.

The intelligent socket may be provided with a display means. The display means may be operable to provide an indication to a user as to whether the intelligent socket is connected or disconnected. If the intelligent socket is being cyclically disconnected and connected, the display may output an indication of the proportion of a cycle that the intelligent socket is connected.

According to a second aspect of the present invention there is provided an intelligent socket suitable for use in demand management on a low voltage circuit of an electricity supply network, the intelligent socket comprising: a use monitor operable to determine whether or not a load is presently connected to the socket and output a signal indicative thereof; a switch operable to disconnect or connect the intelligent socket from the power supply; and a control unit operable to receive said signal from the use monitor, communicate with a remote demand management unit and control the operation of the switch.

The intelligent socket of the second aspect of the present invention may incorporate any or all of the features of the method of the first aspect of the present invention as required or desired.

According to a third aspect of the present invention there is provided a demand management unit for a low voltage circuit of an electricity supply network the demand management unit comprising: load monitoring means provided on one or more low voltage supply cables, the load monitoring means operable to monitor the overall load on each cable; a socket monitoring means operable to monitor a plurality of intelligent sockets connected to said cables to determine which intelligent sockets are in use; and demand control means operable to monitor the overall load on each cable; and when the overall demand exceeds a threshold value, cyclically disconnect and connect the supply to those intelligent sockets in use characterised in that the cycle is varied in response to any unrestricted use of intelligent sockets prior to the initiation of cyclical disconnection and connection.

The demand management unit of the third aspect of the present invention may incorporate any or all of the features of the method of the first aspect of the present invention or the intelligent socket of the second aspect of the present invention as required or desired.

According to a fourth aspect of the present invention there is provided a low voltage circuit of an electricity supply network operable to manage electrical power demand, the network circuit comprising: an electricity substation; a plurality of intelligent sockets connected to the substation via one or more low voltage supply cables; a demand management unit operable to monitor the plurality of intelligent sockets to determine which sockets are in use; monitor the overall load demanded from the network section; and when the overall demand exceeds a threshold value, cyclically disconnect and connect the supply to those intelligent sockets in use characterised in that the cycle is varied in response to any unrestricted use of intelligent sockets prior to the initiation of cyclical disconnection and connection.

The electricity supply network section of the fourth aspect of the present invention may incorporate any or all of the features of the method of the first aspect of the present invention, the intelligent socket of the second aspect of the present invention or the demand management unit of the third aspect of the present invention as required or desired.

In order that the invention is clearly understood, one embodiment will be described in greater detail below, by way of example only and with reference to the accompanying drawings in which:
- Figure 1: is an illustration of the typical daily demand curve in the UK;
- Figure 2: is a schematic illustration of a low voltage section of a power supply network according to the present invention; and
- Figure 3: is a schematic block diagram of an intelligent socket according to the present invention.

Whilst the example below is described in terms of managing the demand related to charging of electric vehicles on a domestic power supply network, the skilled man will appreciate that the present invention may be applied to management of other large loads on electricity supply networks.

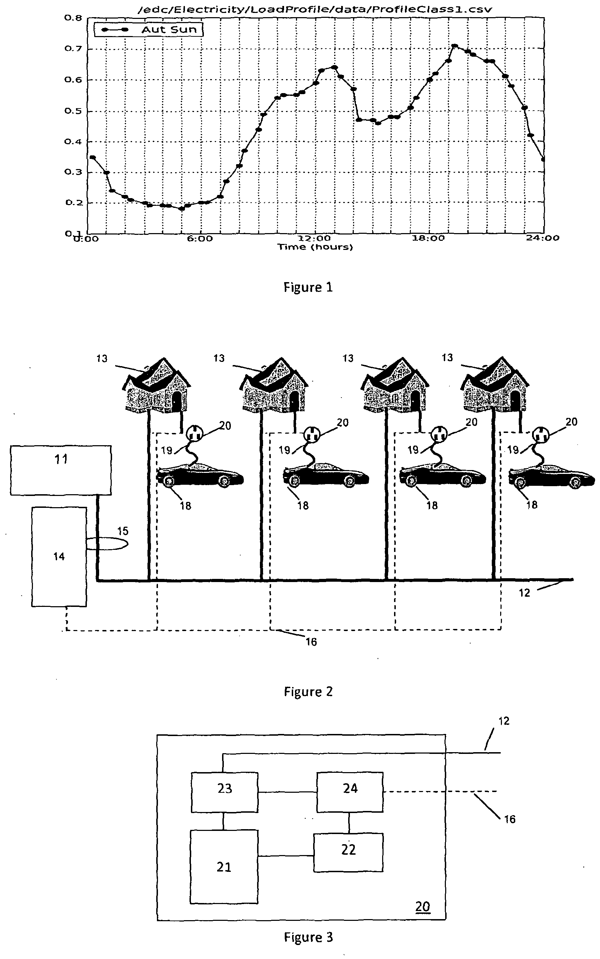

Figure 1 below shows the profile for electricity usage by a domestic customer during an autumn weekday. From this profile it is clear to see the increased electricity usage around the early to late evening when people are returning from work. This is also the time when people are likely to be plugging in their electric vehicles for charging. There is a significant reduction in demand during the early hours of the morning; if the electric vehicles could be charged during this period it would make for a more efficient use of the electrical infrastructure.

Turning now to figure 2, a schematic illustration of a local low voltage circuit 10 of an electricity supply network is shown. An electricity substation 11 receives a high voltage electricity supply and transforms it to a low voltage for domestic use. The low voltage supply is distributed via one or more low voltage supply cables 12 running between the substation 11 and a plurality of properties 13. The substation 11 is also provided with a demand management unit 14. The demand management unit incorporates a load monitoring means 15 operable to measure the load on the or each low voltage supply cable 12.

In the illustrated example, each of these properties 13 is provided with at least one intelligent socket 20 for high load appliances. In the present example, the intelligent socket 20 is adapted to receive a charging lead 19 of an electric vehicle 18, the intelligent socket 20 itself being connected via the domestic supply network of the property to low voltage cable 12.

The intelligent socket 20 comprises contacts 21 for making a connection with the conductors of the charging lead; a use monitor 22 operable to detect when a load (i.e. an electric vehicle) is drawn from the contacts 21; a switch 23 operable to disconnect or connect the electricity supply to the contacts; and a control unit 24. The control unit is operable to communicate with the demand management unit 14 via a suitable communications link 16. In one preferred embodiment, the communications link 16 is provided by power line carrier (PLC) signals transmitted along low voltage cable 12. This implementation conveniently utilises existing cables to provide communication. Alternatively a dedicated wired or wireless link may be provided.

In operation, the demand management unit 14 monitors communications from each intelligent socket 20 to determine which intelligent sockets 20 are in use. The demand management unit 14 also monitors the measured load on the low voltage supply cable 12. When the measured load exceeds a threshold, the demand management unit 14 enters a power rationing mode. In this mode, the demand management unit 14 sends signals to the control unit 24 of each intelligent socket 20 in use. In response to the signals the switch 23 is cyclically operated. This causes the contacts 21 (and hence the electric vehicle 18) to be cyclically disconnected and connected from the electrical supply.

The above functionality thus provides for some rationed supply to each electric vehicle 18 during peak demand times. This prevents the overloading of low voltage cables 12. As such, the present invention provides a ready way to manage the introduction of high load appliances onto existing low voltage supply networks. This can avert the need to upgrade the network or can be used as an interim solution until the network can be upgraded.

It is of course to be understood that the invention is not to be restricted to the details of the above embodiment which is described by way of example only

## Claims

1. A method suitable for managing electrical power demand on a low voltage circuit of an electricity supply network provided with a plurality of intelligent sockets, the method comprising: monitoring the plurality of intelligent sockets (20) to determine which sockets (20) are in use; monitoring the overall load demanded from the network section; and, when the overall load demand exceeds a threshold value, cyclically disconnecting and connecting the supply to those intelligent sockets (20) in use **characterised in that** the cycle is varied in response to any unrestricted use of intelligent sockets (20) prior to the initiation of cyclical disconnection and connection.

2. A method as claimed in claim 1 wherein the intelligent sockets (20) are provided for high load appliances only.

3. A method as claimed in claim 1 or claim 2 wherein the cycle is adapted such that each intelligent socket (20) in use will receive an equal connection time.

4. A method as claimed in any preceding claim wherein each intelligent socket (20) in use is disconnected and connected sequentially in turn or wherein selected groups of intelligent sockets (20) in use are disconnected and connected sequentially in turn.

5. A method as claimed in any preceding claim wherein the method is controlled by a demand management (14) unit located at a local substation (11) and the method involves monitoring the overall load on the substation (11) or the overall load on individual low voltage power supply cables (12).

6. A method as claimed in any preceding claim wherein the method includes the intelligent socket (20) communicating to the demand management unit when they are in use.

7. A method as claimed in any preceding claim wherein monitoring the intelligent sockets (20) comprises: determining whether or not a load is presently connected to the socket (20) and outputing a signal indicative thereof;

8. A method as claimed in claim 7 wherein the method includes storing data relating to operation of the intelligent socket (20) in a data store incorporated into the intelligent socket (20) or in a remote data store in communication with the intelligent socket (20).

9. A demand management unit (14) for a low voltage circuit of an electricity supply network the demand management unit (14) comprising: load monitoring means provided on one or more low voltage supply cables, the load monitoring means operable to monitor the overall load on each cable; a socket monitoring means operable to monitor a plurality of intelligent sockets (20) connected to said cables to determine which intelligent sockets are in use; and demand control means operable to monitor the overall load on each cable; and when the overall demand exceeds a threshold value, cyclically disconnect and connect the supply to those intelligent sockets (20) in use **characterised in that** the cycle is varied in response to any unrestricted use of intelligent sockets (20) prior to the initiation of cyclical disconnection and connection.

10. A demand management unit (14) as claimed in claim 9 wherein the demand management unit (14) is located at a local substation (11) and wherein the demand management unit (14) is operable to measure the overall load on the substation (11) or the overall load on individual low voltage power supply cables (12).

11. A demand management unit (14) as claimed in any one of claims 9 to 10 wherein the demand management unit (14) is operable to communicate information relating to its operation to a network management system.

12. A demand management unit (14) as claimed in any one of claims 9 to 11 wherein the demand management unit (14) may be operable to store data relating to its operation in a local data store incorporated into the demand management unit (14) or in a remote data store in communication with the demand management unit (14).

13. A low voltage circuit of an electricity supply network operable to manage electrical power demand, the network circuit comprising: an electricity substation (11); a plurality of intelligent sockets (20) connected to the substation via one or more low voltage supply cables (12); and a demand management unit according to any one of claims 9-12.

14. A low voltage electricity supply network section as claimed in claim 13 wherein the intelligent sockets (20) are provided for high load appliances only.

15. A low voltage electricity supply network section as claimed in claim 14 wherein the demand management unit (14) is located at a local substation (11) and wherein the demand management unit is operable to measure the overall load on the substation (11) or the overall load on individual low voltage power supply cables (12).

16. A low voltage electricity supply network section as claimed in any one of claims 13 to 15 wherein the demand management unit (14) is operable to communicate information relating to its operation to a network management system.

17. A low voltage electricity supply network section as claimed in any one of claims 13 to 16 wherein the intelligent sockets (20) are each operable to communicate to the demand management unit when they are in use.

## Patentansprüche

1. Verfahren zur Verwaltung eines elektrischen Leistungsbedarfs an einem Niederspannungskreis eines Stromversorgungsnetzes, das mit einer Mehrzahl von intelligenten Steckdosen versehen ist, wobei das Verfahren aufweist:
Überwachen der Mehrzahl intelligenter Steckdosen (20), zum Bestimmen, welche Steckdosen (20) in Verwendung sind;
Überwachung des Gesamtleistungsbedarfs des Netzwerkbereichs; und,
wenn der Gesamtleistungsbedarf einen Schwellenwert übersteigt, zyklisches Verbinden und Trennen der Versorgung zu den verwendeten intelligenten Steckdosen (20),
**dadurch gekennzeichnet,**
**dass** der Zyklus in Abhängigkeit von einer uneingeschränkten Verwendung von intelligenten Steckdosen (20) vor der Initiation des zyklischen Unterbrechens und Verbindens variiert wird.

2. Verfahren nach Anspruch 1,
**dadurch gekennzeichnet,**
**dass** die intelligenten Steckdosen (20) nur für Hochlastgeräte vorgesehen sind.

3. Verfahren nach Anspruch 1 oder 2,
**dadurch gekennzeichnet,**
**dass** der Zyklus so angepasst ist, dass jede verwendete intelligente Steckdose (20) eine gleiche Verbindungszeit erhält.

4. Verfahren nach einem der voranstehenden Ansprüche,
**dadurch gekennzeichnet,**
**dass** jede verwendete intelligente Steckdose (20) nacheinander getrennt und nacheinander verbunden wird oder dass ausgewählte Gruppen von verwendeten intelligenten Steckdosen (20) nacheinander getrennt und nacheinander verbunden werden.

5. Verfahren nach einem der voranstehenden Ansprüche,
**dadurch gekennzeichnet,**
**dass** das Verfahren von einer Bedarfsmanagementeinheit (14) gesteuert wird, welche an einer lokalen Unterstation (11) angeordneten ist, und das Verfahren die Überwachung der Gesamtbelastung der Unterstation (11) oder der Gesamtbelastung an einzelnen Niederspannungsversorgungskabeln (12) aufweist.

6. Verfahren nach einem der voranstehenden Ansprüche,
**dadurch gekennzeichnet,**
**dass** das Verfahren aufweist, dass die intelligente Steckdose (20) mit der Bedarfsmanagementeinheit kommuniziert, wann sie in Gebrauch sind.

7. Verfahren nach einem der voranstehenden Ansprüche,
**dadurch gekennzeichnet,**
**dass** das Überwachen der intelligenten Steckdosen (20) aufweist:
Bestimmen, ob eine Last gegenwärtig mit der Buchse (20) verbunden ist oder nicht, und Ausgeben eines Signals, dass dies anzeigt.

8. Verfahren nach Anspruch 7,
**dadurch gekennzeichnet,**
**dass** das Verfahren das Speichern von Daten in einem in die intelligente Steckdose (20) integrierten Datenspeicher oder in einem beabstandeten Datenspeicher in Verbindung mit der intelligenten Steckdose (20), aufweist, welche sich auf den Betrieb der intelligenten Steckdose (20) beziehen.

9. Bedarfsmanagementeinheit (14) für einen Niederspannungskreis eines Stromversorgungsnetzes, wobei die Bedarfsmanagementeinheit (14) aufweist:
eine Lastüberwachungseinrichtung, die an einem oder mehreren Niederspannungsversorgungskabeln vorgesehen ist, wobei die Lastüberwachungseinrichtung betreibbar ist, die Gesamtheit der Belastung auf jedem Kabel zu überwachen;
eine Steckdosenüberwachungseinrichtung, die betreibbar ist, eine Mehrzahl von intelligenten Steckdosen (20) zu überwachen, die mit den Kabeln verbunden sind, zum Bestimmen, welche der intelligenten Steckdosen in Gebrauch sind; und
eine Bedarfssteuereinrichtung, die betreibbar ist, die Gesamtbelastung jedes Kabels zu überwachen; und wenn die Gesamtnachfrage einen Schwellenwert übersteigt; zyklisch die Versorgung mit den verwendeten intelligenten Steckdosen (20) zu trennen und zu verbinden, **dadurch gekennzeichnet,**
**dass** der Zyklus in Abhängigkeit von einer uneingeschränkten Verwendung von intelligenten Steckdosen (20) vor der Initiation des zyklischen Unterbrechens und Verbindens variierbar ist.

10. Bedarfsmanagementeinheit (14) nach Anspruch 9,
**dadurch gekennzeichnet,**
**dass** die Bedarfsmanagementeinheit (14) an einer lokalen Unterstation (11) angeordnet ist und
**dass** die Bedarfsmanagementeinheit (14) betreibbar ist, die Gesamtbelastung der Unterstation (11) oder die Gesamtbelastung einzelner Niederspannungsversorgungskabel (12) zu messen.

11. Bedarfsmanagementeinheit (14) nach einem der Ansprüche 9 bis 10,
**dadurch gekennzeichnet,**
**dass** die Bedarfsmanagementeinheit (14) betreibbar ist, Informationen über seinen Betrieb an ein Netzwerkmanagementsystem zu übermitteln.

12. Bedarfsmanagementeinheit (14) nach einem der Ansprüche 9 bis 11,
**dadurch gekennzeichnet,**
**dass** die Bedarfsmanagementeinheit (14) betreibbar ist, Daten bezüglich ihres Betriebs in einem lokalen Datenspeicher in der Bedarfsmanagementeinheit (14) oder in einem entfernten Datenspeicher zu speichern, welcher in Verbindung mit der Bedarfsmanagementeinheit (14) steht.

13. Niederspannungsschaltung eines Stromversorgungsnetzes, das betreibbar ist, den elektrischen Leistungsbedarf zu verwalten, wobei die Netzwerkschaltung: eine Elektrizitätsstation (11); eine Mehrzahl von intelligenten Steckdosen (20), die mit der Unterstation über ein oder mehrere Niederspannungsversorgungskabel (12) verbunden sind; und eine Bedarfsmanagementeinheit nach einem der Ansprüche 9 bis 12 aufweist.

14. Niederspannungsschaltung eines Stromversorgungsnetzes nach Anspruch 13,
**dadurch gekennzeichnet,**
**dass** die intelligenten Steckdosen (20) nur für Hochlastgeräte vorgesehen sind.

15. Niederspannungsschaltung eines Stromversorgungsnetzes nach Anspruch 14,
**dadurch gekennzeichnet,**
**dass** die Bedarfsmanagementeinheit (14) an einer lokalen Unterstation (11) angeordnet ist und
**dass** die Bedarfsmanagementeinheit betreibbar ist, die Gesamtbelastung der Unterstation (11) oder die Gesamtbelastung einzelner Niederspannungsversorgungskabel (12) zu messen.

16. Niederspannungsschaltung eines Stromversorgungsnetzes nach einem der Ansprüche 13 bis 15,
**dadurch gekennzeichnet,**
**dass** die Bedarfsmanagementeinheit (14) betreibbar ist, Informationen über ihren Betrieb an ein Netzwerkmanagementsystem zu übermitteln.

17. Niederspannungsschaltung eines Stromversorgungsnetzes nach einem der Ansprüche 13 bis 16,
**dadurch gekennzeichnet,**
**dass** die intelligenten Steckdosen (20) betreibbar sind, der Bedarfsmanagementeinheit (14) mitzuteilen, wenn sie in Verwendung sind.

## Revendications

1. Procédé qui convient pour gérer une demande d'énergie électrique sur un circuit à basse tension d'un réseau d'alimentation en électricité, pourvu d'une pluralité d'interfaces de connexion intelligente, le procédé comprenant : contrôler la pluralité d'interfaces (20) de connexion intelligente, pour déterminer celles des interfaces (20) qui sont en utilisation ; contrôler la charge globale demandée par la section de réseau et, si la demande de charge globale dépasse une valeur de seuil, déconnecter et connecter cycliquement l'alimentation à ces interfaces (20) de connexion intelligente en utilisation, **caractérisé en ce que** l'on fait varier le cycle en réaction à toute utilisation non restreinte d'interfaces (20) de connexion intelligente, avant de faire commencer une déconnexion et connexion cyclique.

2. Procédé suivant la revendication 1, dans lequel les interfaces (20) de connexion intelligente sont prévues pour des appareils à grande charge seulement.

3. Procédé suivant la revendication 1 ou la revendication 2, dans lequel on adapte le cycle de manière à ce que chaque interface (20) de connexion intelligente en utilisation reçoive un même temps de connexion.

4. Procédé suivant l'une quelconque des revendications précédentes, dans lequel chaque interface (20) de connexion intelligente en utilisation est déconnectée et connectée séquentiellement tour à tour, ou dans lequel des groupes sélectionnés d'interfaces (20) de connexion intelligente en utilisation sont déconnectés et connectés séquentiellement tour à tour, ou dans lequel des groupes sélectionnés d'interfaces (20) de connexion intelligente en utilisation sont déconnectés et connectés séquentiellement tour à tour.

5. Procédé suivant l'une quelconque des revendications précédentes, dans lequel le procédé est commandé par une unité de gestion (14) de demande, située à une sous-station (11) locale et le procédé implique un contrôle de la charge globale sur la sous-station (11), ou de la charge globale sur des câbles (12) individuels d'alimentation en courant de basse tension.

6. Procédé suivant l'une quelconque des revendications précédentes, dans lequel le procédé inclut le fait que l'interface (20) de connexion intelligente communique avec l'unité de gestion de la demande lorsqu'elles sont en utilisation.

7. Procédé suivant l'une quelconque des revendications précédentes, dans lequel, contrôler les interfaces (20) de connexion intelligente comprend : déterminer si, ou non, une charge est connectée présentement à l'interface (20) de connexion et sortir un signal l'indiquant.

8. Procédé suivant la revendication 7, dans lequel le procédé comprend mémoriser des données se rapportant à un fonctionnement de l'interface (20) de connexion intelligente dans une mémoire de données incorporée dans l'interface (20) de connexion intelligente, ou dans une mémoire de données à distance, en communication avec l'interface (20) de connexion intelligente.

9. Unité (14) de gestion de la demande pour un circuit à basse tension d'un réseau d'alimentation en électricité, l'unité (14) de gestion de la demande comprenant : des moyens de contrôle de charge prévus sur un câble ou sur plusieurs câbles d'alimentation en basse tension, les moyens de contrôle de charge pouvant fonctionner pour contrôler la charge globale sur chaque câble ; un moyen de contrôle d'interface de connexion pouvant fonctionner pour contrôler une pluralité d'interfaces (20) de connexion intelligente, connectées au câble, pour déterminer les interfaces de connexion intelligente qui sont en utilisation ; et des moyens de contrôle de la demande pouvant fonctionner pour contrôler la charge globale sur chaque câble ; et, lorsque la demande globale dépasse une valeur de seuil, déconnecter et connecter cycliquement l'alimentation à ces interfaces (20) de connexion intelligente en utilisation, **caractérisée en ce que** l'on fait varier le cycle en réaction à toute utilisation non restreinte d'interfaces (20) de connexion intelligente, avant de faire commencer une déconnexion et connexion cyclique.

10. Unité (14) de gestion de la demande suivant la revendication 9, dans laquelle l'unité (14) de gestion de la demande est placée à une sous-station (11) locale et dans lequel l'unité (14) de gestion de la demande peut fonctionner pour mesurer la charge globale sur la sous-station (11) ou la charge globale sur des câbles (12) individuels d'alimentation en courant de basse tension.

11. Unité (14) de gestion de la demande suivant l'une quelconque des revendications 9 à 10, dans laquelle l'unité (14) de gestion de la demande peut fonctionner pour communiquer des informations se rapportant à son fonctionnement à un système de gestion de réseau.

12. Unité (14) de gestion de la demande suivant l'une quelconque des revendications 9 à 11, dans laquelle l'unité (14) de gestion de la demande peut fonctionner pour mémoriser des données se rapportant à son fonctionnement dans une mémoire de données locales incorporée dans l'unité (14) de gestion de la demande ou dans une mémoire de données éloignée en communication avec l'unité (14) de gestion de la demande.

13. Circuit à basse tension d'un réseau d'alimentation en électricité pouvant fonctionner pour gérer la demande d'énergie électrique, le circuit de réseau comprenant : une sous-station (11) d'électricité ; une pluralité d'interfaces (20) de connexion intelligente, reliées à la sous-station par un câble (12) ou par plusieurs câbles (12) d'alimentation à basse tension et une unité de gestion de la demande suivant l'une quelconque des revendications 9 à 12.

14. Section de réseau d'alimentation en électricité à basse tension suivant la revendication 13, dans laquelle les interfaces (20) de connexion intelligente sont prévues pour des appareils à grande charge seulement.

15. Section de réseau d'alimentation en électricité à basse tension suivant la revendication 14, dans laquelle l'unité (14) de gestion de la demande est placée à une sous-station (11) locale et dans laquelle l'unité de gestion de la demande peut fonctionner pour mesurer la charge globale sur la sous-station (11) ou la charge globale sur des câbles (12) individuels d'alimentation en courant de basse tension.

16. Section de réseau d'alimentation en électricité à basse tension suivant l'une quelconque des revendications 13 à 15, dans laquelle l'unité (14) de gestion de la demande peut fonctionner pour communiquer des informations se rapportant à son fonctionnement à un système de gestion de réseau.

17. Section de réseau d'alimentation en électricité à basse tension suivant l'une quelconque des revendications 13 à 16, dans laquelle les interfaces (20) de connexion intelligente peuvent fonctionner chacune pour communiquer avec l'unité de gestion de la demande lorsqu'elles sont en utilisation.
